# EUROPÄISCHE PATENTSCHRIFT

(11) **EP 3 601 687 B1**
(45) Veröffentlichungstag und Bekanntmachung des Hinweises auf die Patenterteilung: **09.11.2022**
(21) Anmeldenummer: 18730964.6
(22) Anmeldetag: 23.03.2018
(51) Int. Cl.: E03B 3/03, B65D 88/00

(54) **WASSERBEVORRATUNGS-SYSTEM FÜR TROCKENREGIONEN UND VERFAHREN HIERFÜR**
WATER STORAGE SYSTEM FOR ARID REGIONS AND METHOD THEREFORE
SYSTÈME DE STOCKAGE D'EAU POUR ZONES ARIDES SON MÉTHODE

(30) Priorität: 24.03.2017 DE 102017106366; 23.05.2017 DE 102017111286
(43) Veröffentlichungstag der Anmeldung: 05.02.2020
(73) Patentinhaber: Hahn, Günter, 76534 Baden-Baden (DE)
(72) Erfinder: Hahn, Günter, 76534 Baden-Baden (DE)
(74) Vertreter: Janke Scholl Patentanwälte PartG mbB
(86) Internationale Anmeldenummer: PCT/DE2018/100263
(87) Internationale Veröffentlichungsnummer: WO 2018/171842

(56) Entgegenhaltungen:
- WO-A1-2006/095384
- JP-A- H09 221 773
- US-A- 1 435 097
- US-A1- 2014 346 099

## Beschreibung

Die vorliegende Erfindung betrifft ein Wasserbevorratungs-System gemäß Anspruch 1 vorzugsweise für semiaride Regionen bzw. für Trockenregionen zur Aufnahme und Speicherung von Wasser, wobei das Wasserbevorratungs-System unterirdisch angelegt ist und eine oder mehrere Vorrichtungen zur Gewinnung von Wasser über geeignete Wassereinzugsregionen aus saisonalen Niederschlägen sowie Wasser aus anderen Wasserressourcen zur Speicherung umfasst, mindestens einen Speicherraum bzw. eine Speicherröhre für dieses Wasser besitzt, welches mit einer oder mehreren Vorrichtungen zur Aufnahme von Wasser verbunden ist und eine oder mehrere Vorrichtungen zur Entnahme von Wasser enthält, welches in seiner Systementwicklung in Funktionalität und Beständigkeit nach kosteneffizienten Kriterien konzipiert ist.

Der steigende Bedarf an Trink- und Nutzwasser, beispielsweise durch Bevölkerungswachstum und Zivilisationsanspruch verursacht, erfordert besonders im Binnenland semiarider Regionen nachhaltige Lösungen zur Sicherung bestehender Siedlungsgebiete sowie in solchen Gebieten, die bisher als urbanisierbare Regionen mangels Wasserverfügbarkeit nicht geeignet waren. Derartige Lösungen in semiariden Regionen ergeben sich durchaus über die Gewinnung regenerativer Wasserressourcen über saisonale Niederschläge, insbesondere in solchen Gebieten, in denen diese Niederschläge üblicherweise als Starkregen auftreten. Die bisherige Niederschlagsstatistik wird in semiariden Regionen und zunehmend auch in regenarmen nicht semiariden Regionen durch den Klimawandel negativ beeinflusst, was sich u. a. künftig auf die Förderleistung von vorhandenen Quellen auswirkt und bei der Wasserversorgung über Brunnen den Grundwasserspiegel bei erhöhter Entnahme absenkt.

Im Binnenland semiarider Regionen wurden schon vor Jahrhunderten Quellen gefasst sowie über aufwendige Verfahren Aquifere für die regionale Wasserversorgung erschlossen. Waren Grundwasserleiter ergiebig, konnten Brunnen den regionalen Wasserbedarf decken. Mit der Möglichkeit Meerwasser zu entsalzen, ergaben sich in Küstennähe semiarider und auch arider Regionen neue Möglichkeiten an Urbanisierungen mit der Folge, dass entlang der Küsten die Bevölkerungsdichte überproportional zunahm, zumal steigende Wasserdefizite im Binnenland die Ausweitung der Siedlungstätigkeit im Binnenland einschränkte.

Wasserdefizite entstehen vielfach durch Versalzung von Brunnen aufgrund erhöhter Wasserentnahme bei gleichzeitigem Absinken des Grundwasserspiegels. Küstennah führt das zur Versalzung von Küstenzonen durch Beiziehung von Meerwasser mit negativen Folgen für die landwirtschaftliche Nutzung der Böden. Vielfach ist dafür eine Abnahme von Niederschlägen und/oder eine erhöhte Wasserentnahme über Brunnen mit verantwortlich, was landseitig einen niederen Druckgradienten erzeugt, gleichzeitig sich auf die Förderleistungen von Quellen in Gebirgsregionen und die Anreicherung der Grundwasserleiter mangels Niederschlägen auswirkt. Diese Tendenz dürfte sich mit fortschreitendem Klimawandel verstärken, was im Binnenland zu weiteren Engpässen bei der regionalen Trink- und Nutzwasserversorgung führen wird.

Derzeit wird zunehmend versucht, Wasserdefizite an Trink- und Nutzwasser im Binnenland semiarider Regionen bzw. in Wasserdefizitregionen durch entsalztes Meerwasser über Pipelines auszugleichen. Der dafür erforderliche Energiebedarf wird in arabischen Ländern derzeit überwiegend über fossile Energieträger gedeckt, was sich wiederum unterstützend auf den Klimawandel auswirken wird.

In vielen Staaten mit semiariden Regionen gibt es durchaus regenerative Wasserressourcen, die in subtropischen semiariden Regionen in nur wenigen Ereignissen meist saisonal als Starkregen auftreten. Das Niederschlagsaufkommen in manchen dieser Regionen erreicht vielfach 400 mm pro Jahr und mehr, weswegen diese Niederschläge meist als Flutwässer abfließen. Mangels natürlicher Barrieren, wie z. B. durch Vegetation, wird dadurch die Bevölkerung gefährdet und es werden erhebliche Schäden an Infrastrukturen verursacht.

WO 2006/095384 beschreibt eine Rohrbaugruppe für einen Speichertank, die eine Vielzahl von vertikal aufgerichteten starren Rohren, die in horizontaler Richtung in einem vorbestimmten Abstand W angeordnet sind, und zum Verbinden der parallel zueinander angeordneten starren Rohre eine Rohrkupplungsvorrichtung aufweist. Die Rohrbaugruppe wird durch eine dünne Platte abgedeckt und bildet einen Speichertank.

US2014/0346009 offenbart ein System zum Sammeln von Regenwasser von einem Hausdach oder einem anderen Gebäude, das über Fallrohre abfließt und über ein Sammelrohr in ein Filtersystem geleitet wird. Aus dem Filtersystem wird das gesammelte Regenwasser mittels Schwerkraft in ein oder mehrere Speichertanks geleitet. Bei Bedarf kann das gebildete Regenwasser über ein Verteilersystem aus den Speichertanks zu einem Bewässerungssystem gepumpt werden.

In der US 1,435,097 wird eine Zisterne beschrieben, die eine untere und eine obere Kammer sowie einen Filter, der die beiden Kammern voneinander trennt, aufweist sowie Mittel, um Flüssigkeit aus der unteren Kammer zu entnehmen. Ferner ist in der unteren Kammer in Bodennähe ein Rohr angeordnet, das sich vom Boden der unteren Kammer nach oben erstreckt und mit der äußeren Umgebung verbunden ist und über das Wasser entnommen werden kann. Wenn der Wasserdruck zu gering ist, kann über ein weiteres Rohr Luft in die untere Kammer geleitet werden, wodurch der Wasserdruck erhöht wird.

JP H09 221773 offenbart einen erdbebensicheren und wasserdichten Kessel, dessen Wandung aus einer Vielzahl von Einzelblöcken besteht, die jeweils über eine Trennwand von einer getrennt sind. Die Einzelblöcke weisen einen Zwischenraum zwischen der Innen- und der Außenschale auf, in den Beton eingefüllt wird.

Der vorliegenden Erfindung lag daher die Aufgabe zugrunde, ein Wasserbevorratungs-System zur Verfügung zu stellen, welches insbesondere in semiariden Regionen bzw. in Trockenregionen in der Lage ist, saisonale Niederschläge, die vorzugsweise in Form von Starkregen niedergehen, aus geeigneten Wassereinzugsregionen (Catchment area) aufzunehmen, dieses Wasser bis zur nächsten Regenperiode, möglichst unter Erhalt der Wasserqualität zu speichern, so dass es in der Trockenperiode der Bevölkerung als Trinkwasser und ggf. als Nutzwasser z. B. für die Landwirtschaft zur Verfügung gestellt werden kann. Aufgrund dieser Aufgabenstellung kann eine weitere Bedarfslücke geschlossen werden, um das Wasserbevorratungs-System überall dort einzusetzen, um Wasser aus anderen Wasserressourcen zu speichern, was sich somit nicht nur auf semiaride Regionen bezieht.

Gegenstand der vorliegenden Erfindung ist demgemäß ein Wasserbevorratungs-System gemäß Anspruch 1 für semiaride Regionen bzw. für Trockenregionen über die Gewinnung von regenerativen Wasserressourcen aus geeigneten Wassereinzugsregionen und deren Aufnahme und Speicherung, wobei das Wasserbevorratungs-Systemunterirdisch angelegt ist und
- eine oder mehrere Vorrichtung(en) zur Gewinnung sowie zur Aufnahme von Wasser aus saisonalen Niederschlägen, die vielfach in subtropischen Regionen als Starkregen auftreten, oder welche zur Bevorratung aus anderen Wasserressourcen stammen,
- mindestens einen Speicherraum zur Speicherung von Wasser, welcher mit Vorrichtungen zur Aufnahme von Wasser verbunden ist,
- einen oder mehrere Vorrichtungen zur Entnahme von Wasser umfasst,
der Speicherraum einen mehrwandigen Aufbau hat, wobei die nach außen gerichtete Wand eine solche Stabilität aufweist, dass diese tektonischem Druck standhält und eine Innenwand den Wasserdruck sowie tektonische Ereignisse abfangen kann und dadurch gekennzeichnet ist, dass die Außenwand (14) von Tübbingen (15) gebildet wird, in welche unterschiedliche Vorrichtungen eingebracht sind oder aufgebracht werden können, die einerseits zur Fixierung der Trennwände (6) mit der Außenwand (14) geeignet sind, andererseits eine Verknüpfung der Außenwand (14) mit einer stabilisierenden Innenwand (18) erlauben, ggf. über spezifische Verbindungselementemit der Maßgabe, dass die Vorrichtung zur Aufnahme und Entnahme des Wassers, die gleichzeitig den Zugang zu den Speicherräumen bildet, oberhalb des Wasserspiegels des gespeicherten Wassers angeordnet ist.

Mit dem erfindungsgemäßen Wasserbevorratungs-System ist es möglich, Niederschläge, die als Starkregen in semiariden Regionen niedergehen, schnell aufzunehmen und in einen oder mehrere Speicherräume weiterzuleiten und das aufgenommene Wasser über einen längeren Zeitraum, auch bei Temperaturen, die oberhalb von 25 C liegen, einzulagern, so dass das über einen Zeitraum von mehreren Monaten gespeicherte Wasser nach und nach als Trinkwasser und/oder als Nutzwasser z. B. für die Landwirtschaft verwendet werden kann. Weiter ist es möglich, regionale und überregionale Wasserdefizite durch Zuleitung von diesen oder anderen Wasserressourcen auszugleichen und in ebensolchen Wasserbevorratungs-Systemen zu speichern. Das erfindungsgemäße System zur Wasserbevorratung ist so ausgelegt, dass das gespeicherte Wasser vor Kontaminationen geschützt werden kann.

Das erfindungsgemäße Wasserbevorratungs-System wird vorzugsweise in Trockenregionen bzw. in solchen Gebieten eingesetzt, die über geeignete Wassereinzugsgebiete (Catchment Area) verfügen. Diese Catchment Area zeichnen sich dadurch aus, dass bereits natürliche Abflusswege für Regenwasser existieren, was von Vorteil ist, um dieses Wasseraufkommen durch entsprechende wasserbauliche Maßnahmen aufzunehmen. Über geeignete Vorrichtungen, die gleichzeitig zur Geschiebeverminderung beitragen, wird das Niederschlagswasser über selbstreinigende Dämme und ggf. Zwischendämme gefasst und über Bei- bzw.- Rohrleitungen dem System zugeführt. Die für die Wasserspeicherung erforderlichen Transportsysteme (Pumpen etc.), einschließlich das Rohrleitungssystem, sollten derart dimensioniert sein, dass innerhalb kurzer Zeit große Wassermengen aufgenommen und in den Speicherraum geleitet werden können. Mit diesen Maßnahmen wird das regionale Hochwasserrisiko gleichzeitig herabgesetzt, was Infrastrukturschäden reduziert.

Eine Aufgabe der vorliegenden Erfindung ist es große Wassermengen in kurzer Zeit aufnehmen bzw. speichern zu können. Die entsprechenden Speicherräume sollten daher nicht nur große Volumen aufweisen sondern in Bezug auf ihre Stabilität als unterirdisches Bauwerk eine Kostenoptimierung erlauben. Es hat sich als besonders bevorzugt erwiesen, wenn der Speicherraum über Tunnelröhren gebildet wird, wie solche üblicherweise für Verkehrswege errichtet werden. Die Materialien, aus denen Tunnelröhren hergestellt werden, sind seit langem bekannt, ferner ist bekannt, dass diese eine ausreichende Stabilität besitzen und der unterirdische Bau von Tunnelröhren technologisch beherrschbar ist.

Aus Gründen der Sicherheit, zur Beherrschung der Wasserqualität sowie für Betrieb und Service ist es von Vorteil, wenn der Speicherraum für das Wasser durch Trennwände in einzelne Speichereinheiten unterteilt ist, die vorzugsweise miteinander verbundenen werden können. Jede Speichereinheit sollte mit Vorrichtungen zur Aufnahme und Vorrichtungen zur Entnahme von Wasser verbunden sein, so dass jede Speichereinheit separat und unabhängig von anderen Speichereinheiten bedient und, falls erforderlich, gewartet oder repariert werden kann. Der Aufbau in Form und Gestaltung der einzelnen Speichereinheiten erlaubt einen Ausgleich der Druckverhältnisse vorzugsweise zwischen den einzelnen Speichereinheiten, dass dadurch selbst Kosten bei der Konstruktion der Trennwände der einzelnen Speichereinheiten, die auch als Zwischenwände bezeichnet werden können, eingespart werden können.

Die einzelnen Speichereinheiten sollten über geeignete Vorrichtungen, beispielsweise über Röhrensysteme, Schieber, Ventile und/oder Pumpen, miteinander verbunden werden können, damit die Speichereinheiten gemeinsam durch Zulauf über verschließbare Öffnungen in den Trennwänden oder einzeln über eine Systemsteuerung befüllt oder entleert werden können. Diese einzelnen Komponenten, auch mögliche Zu- und Ableitungen für das Wasser, sind vorzugsweise innerhalb der Aussparungen der Zwischenwände/Trennwände und vor allem in einem Versorgungstunnel angeordnet. Auf diese Weise ist es möglich, dass, wenn über eine Vorrichtung zur Aufnahme des Wassers, die dem Wasserzufluss am nächsten gelegen ist, von der ersten Speichereinheit über jede einzelne höher liegende Speichereinheit das eingeleitete Wasser direkt bis ans Ende des gesamten Speicherraums fließt bzw. transportiert werden kann, wobei zur Minimierung des Drucks auf die Trennwände benachbarter Speichereinheiten eine direkte und indirekte Verbindung zwischen den Speichereinheiten besteht, die unterbrochen werden kann. Das ist immer dann der Fall, wenn die dem Wasserzufluss am nächsten gelegene Speichereinheit gefüllt ist. Über die Systemsteuerung kann unter Druckausgleich benachbarter Speichereinheiten jede einzelne Speichereinheit auch separat befüllt werden.

Im Gegenzug kann das Wasser, das nach Füllung der Speichereinheiten für den Verbrauch entnommen wird, aus den höher gelegenen Speichereinheiten des Speicherraums unter Druckausgleich benachbarter Speichereinheiten in Richtung Entnahmevorrichtung tiefer liegender Speichereinheiten zufließen oder einzeln unter Druckausgleich benachbarter Speichereinheiten entleert werden. Für den Fall, dass einzelne Speichereinheiten nicht benutzt werden können, können diese von anderen Speichereinheiten getrennt werden. Aus Gründen der Sicherheit und um zu verhindern, dass der Versorgungstunnel von Wasser geflutet wird, ist der Versorgungstunnel vorzugsweise oberhalb des Wasserspiegels des Speicherraums bzw. der einzelnen Speichereinheiten angeordnet.

Im Gegensatz zu den bekannten Zisternen, die seit alters her gebaut werden, besteht der Speicherraum der vorliegenden Erfindung nicht aus einem Hohlraum, der mehr oder weniger quadratisch oder rechteckig gestaltet ist und von oben mit Wasser gefüllt wird, sondern ist vorzugsweise ein langgestreckter Hohlraum, beispielsweise in Form eines Tunnels. Diese Tunnelröhren haben den Vorteil, dass das gespeicherte Wasser kaum mit Einflussfaktoren, die wesentlich für externe Kontaminationen verantwortlich sind, in Kontakt treten kann, gleichzeitig mangels natürlicher Lichteinwirkung z. B. Algenwachstum reduziert werden kann.

Vorzugsweise weist der Speicherraum eine solche Steigung auf, dass der Druck auf die Trennwände der einzelnen Speichereinheiten bei vollständiger Füllung benachbarter Speichereinheiten so gering wie möglich ist, jedoch eine vom gespeicherten Wasser nicht gefluteter Bereich besteht, der als Zugang von der oberhalb liegenden Trennwand einer Speichereinheit in die unterhalb liegende Speichereinheit genutzt werden kann.

Die Wandung des Speicherraums bzw. der Speichereinheiten hat mehrere Aufgaben. Zum einen muss die Wandung stabil genug sein, um dem tektonischen Außendruck standzuhalten, zum anderen muss sichergestellt sein, dass der Speicherraum bzw. die einzelnen Speichereinheiten den Wasserdruck sowie tektonische Ereignisse abfangen können. Auch sollte das Wasser über längere Zeit und bei Temperaturen über 25 °C gelagert werden können. Um diese Aufgaben zu erfüllen, hat es sich als vorteilhaft erwiesen, wenn die Wandung aus einer Außenwand und einer Innenwand besteht. Die Außenwand ist vorzugsweise eine Betonwand, die i. d. R. mit Baustahl bewehrt ist, sie kann beispielsweise von im Tunnelbau üblichen Tübbingen gebildet werden. Wird der Speicherraum bzw. die gesamte Speicherröhre in Form einer Tunnelröhre mit der Tunnellingvortriebstechnik gestaltet, entspricht die Außenwand der Stärke derartiger Tübbinge. Die Innenwand, die einen zwei- oder mehrwandigen bzw. mehrschichtigen Aufbau hat, eine stabilisierende Innenwand von mindestens 20 cm Stärke, eine darauf aufgetragene Innenschicht von bis zu einigen cm Stärke und ggf. eine oder weitere auf die Innenschicht aufgetragene Innenbeschichtungen, die im mm-Bereich liegen können, wird vorzugsweise aus unterschiedlichen Spezialbetonmischungen bzw. Mörtelmischungen hergestellt, wobei in die stabilisierende Innenwand und in die Innenschicht korrosionsfreies Bewehrungsmaterial eingebracht ist. In die Innenschicht ist gegenüber der stabilisierenden Innenwand jedoch ein korrosionsfreies Grid eingebracht, das für Elektronen leitfähig ist, gleichzeitig hohe Materialbeständigkeit sowie gute Eigenschaften als Bewehrungsmaterial aufweist. Die mit dem gespeicherten Wasser in Kontakt tretende Schicht besteht üblicherweise aus einem für Wasserspeicher geeigneten Mörtel.

Die einzelnen Schichten der Innenwand des Speicherraums sowie die Innenwand zur Außenwand können über spezifische Verbindungselemente miteinander verbunden werden, vorzugsweise über solche Mittel oder Vorrichtungen, die korrosionsbeständig sind. Zu diesem Zweck befinden sich aufgrund von Berechnungsgrundlagen in den entsprechenden Tübbingen Vorrichtungen, in die einerseits Verbindungselemente zur stabilisierenden Innenwand, andererseits solche zur Fixierung der Trennwände eingebracht werden bzw. angebracht werden können. Darüber hinaus erweist es sich als notwendig, dass die Tübbinge nach ihrer Implementierung auf der konkaven Seite aufgerauht werden, um die stabilisierende Innenwand besser mit der Außenwand zu verbinden.

Zur Verhinderung, zumindest zur Reduzierung von Materialverlusten der mit dem gespeicherten Wasser in Kontakt kommenden Schicht durch mechanische und/oder wasserchemische Einflüsse ist es vorteilhaft sein, die für Wasserspeicher üblichen Mörtel zu verwenden oder Platten als Bauteile mit hohem Härtegrad und/oder wasserchemisch hoher Beständigkeit, die nach Bedarf an ihrer Oberfläche glatt geschliffen sind, wie z. B. Feinsteinzeug. Wegen des Innenradius der Speicherwand sollten diese Platten bzw. Bauteile eine geeignete Größe und Konfiguration aufweisen. Üblicherweise sind solche Bauteile wegen der besseren Verarbeitung miteinander netzverklebt. Anstelle eines solchen Trägernetzes ist es vorteilhaft, dafür ein korrosionsfreies Grid zu verwenden, das hohe Materialbeständigkeit sowie gute Eigenschaften als Bewehrungsmaterial besitzt, gleichzeitig Elektronen leitet, wozu sich beispielsweise Carbon eignet. Die Verplattung bzw. deren einzelne Bauteile, die auf dem korrosionsfreien und elektrisch leitenden Grid durch geeignete Netzverkleber aufgebracht werden können, werden mit geeigneten Füll- und Fugenmaterialien auf die stabilisierende Innenwand aufgebracht, bilden also die Innenschicht, was Innenbeschichtungen überflüssig macht.

Zur Sicherung der Betriebsfähigkeit des gesamten Speichersystems ist es vorteilhaft den Speicherraum zu segmentieren, d. h. die einzelnen Speichereinheiten durch Trennwände voneinander abzutrennen. Der Grundkörper der Trennwände, der bis zu 2 m Stärke und ggf. mehr haben kann, sollte üblicherweise aus Beton bestehen, jedoch unter Verwendung von korrosionsfreiem Bewehrungsmaterial. Dieser Grundkörper wird über geeignete Vorrichtungen, die in die Tübbinge der Außenwand eingebracht oder damit beaufschlagt werden, mit den Tübbingen der Außenwand verankert. Die auf den Grundkörper der Trennwand aufgebrachte stabilisierende Innenwand, die Innenschicht und ggf. weitere Innenbeschichtungen sind vorzugsweise in etwa baugleich, wie diejenigen, die auf der Außenwand aufgebracht werden, wobei die stabilisierende Innenwand wie darauf aufgetragene weitere Schichten, betrifft Innenschicht wie Innenbeschichtungen, mit demjenigen Schichtaufbau, der auf der Außenwand aufgebracht ist, ineinander übergehen.

Der Grundkörper der Trennwand sollte oberhalb seiner oberen Hälfte eine innere Aussparung aufweisen, um darin beispielsweise Saugpumpen zu platzieren, was für deren Funktionstätigkeit aufgrund des Innendurchmessers von über 10 m der einzelnen Speichereinheiten essentiell ist. Diese Pumpen dienen für die Wasserentnahme oder den Druckausgleich zwischen benachbarten Speichereinheiten, selbst wenn die Speichereinheiten getrennt betrieben werden sollen und können gleichzeitig als Umwälzpumpen des gespeicherten Wassers eingesetzt werden, falls dafür keine gesonderten Pumpen vorgesehen sind. Die Aussparung in der Trennwand führt darüber hinaus einerseits zur Materialeinsparung, andererseits wird ein direktes Controlling des gespeicherten Wassers mit üblichen manuellen und technischen Methoden und Verfahren ermöglicht, da zusätzlich direkter Sichtkontakt durch eine mindestens 1 m hohe Öffnung zur tiefer liegenden Speichereinheit besteht, die über eine Vorrichtung verschlossen werden kann. Die Höhe dieser Öffnung korreliert mit dem Wasserspiegel, der sich aus der Steigung des Speicherraums ergibt und erlaubt auch den Einstieg in die tiefer liegende Speichereinheit im Bedarfsfall sowie die manuelle Probenentnahme. Der Zugang zur Aussparung der Trennwände kann über einen Verbindungstunnel zum gemeinsamen über dem Wasserspiegel liegenden Versorgungstunnel erreicht werden, der auch die Zu- und Ableitungen für benachbarte Speichereinheiten enthält, also zum Befüllen oder Entleeren der Speichereinheiten dient. Die Dimensionierung dieses Verbindungstunnels sollte so ausgelegt sein, dass man darin aufrecht stehen kann, der Materialaustausch ungehindert möglich ist, und Zu- und Ableitungen sowie sonstige Versorgungsleitungen mit der Entlüftung installiert werden können.

Eine längere Speicherung von Wasser bei höheren Temperaturen, insbesondere bei Temperaturen oberhalb von 25 °C, ist mit großen Schwierigkeiten verbunden, da das Bakterienwachstum bei höheren Temperaturen üblicherweise ansteigt. Insbesondere, wenn das erfindungsgemäße Wasserbevorratungs-System in semiariden subtropischen oder als Wasserbevorratungs-System in ariden oder tropischen Regionen installiert werden soll, wird das gespeicherte Wasser Temperaturen von oberhalb 25 °C ausgesetzt sein, was für mögliche im Wasser vorhandene Bakterien, wie z. B. Legionellen, eine optimale Wachstumstemperatur ist. Um das Wachstum der Bakterien einzudämmen, hat es sich als vorteilhaft erwiesen, antimikrobiell wirkende Maßnahmen zu treffen, indem die Innenschicht und/oder ggf. die darauf aufgetragene(n) Innenbeschichtung(en) und/oder das Füll- und/oder Fugenmaterial bei Verplattung, Ionen bildende Zusätze und/oder Substanzen enthalten oder damit beaufschlagt sind, die bakterizid, antiviral und/oder fungizid wirksam sind. Beispiele für geeignete Ionen sind Silber- und/oder Kupferionen oder andere Substanzen, welche auch als Nanopartikel vorliegen können, die dekontaminierende Wirkung besitzen. Dahingehend erweist es sich beispielsweise als vorteilhaft in den einzelnen Speicherkammern jeweils sich selbst verbrauchende Elektroden anzuordnen, die bakterizid, antiviral und/oder fungizid wirkende Ionen abgeben, vorzugsweise Silber- oder Kupferelektroden. Eine Dekontaminierung von Wasser kann außerdem durch UV-Bestrahlung, Laserbehandlung als auch durch elektrotechnische Methoden und Verfahren erreicht werden.

Es wurde festgestellt, dass bei der Speicherung von Wasser, insbesondere wenn das Wasser Ionen enthält oder zur antimikrobiellen Behandlung des Wassers Elektroden verwendet werden, die Ionen abgeben, sich Ströme ausbilden. Zum Ableiten dieser Ströme ist es vorteilhaft, wenn die Innenschicht Komponenten enthält, die elektrisch leitend und durch Verbindungselemente miteinander vernetzt sind, darüber hinaus korrosionsbeständig sind, wie beispielsweise Carbonmaterialien. Dadurch ist es möglich Kriechströme zu verhindern bzw. diese über geeignete Vorrichtungen über das Carbonmaterial abzuleiten, was ebenfalls für Überspannungen gilt und ggf. für den Blitzschutz dienen.

Die Verwaltung und Steuerung zur Aufnahme und Entnahme des Wassers der einzelnen Speichereinheiten sowie die Überwachung des Wasserbevorratungs-Systems insgesamt, erfolgt üblicherweise mit Hilfe von Messsonden, Sensoren und technischen Maßnahmen, die mit entsprechenden Datenverarbeitungsanlagen und Steuerungssystemen verbunden sind. Auf diese Weise wird eine Automatisierung der Wasserbevorratung des gesamten Speichersystems erreicht, die Qualitätssicherung des gespeicherten Wassers gewährleistet und die Sicherheitsstandards für dessen Betrieb garantiert.

Besonders bevorzugte Ausführungsformen der vorliegenden Erfindung sind in den beigefügten Figuren dargestellt. Es zeigen:
- Fig. 1:: einen Schnitt durch ein Wasserbevorratungs-System in Längsrichtung;
- Fig. 2:: einen Schnitt durch das Wasserbevorratungs-System in der Schnittebene B - B;
- Fig. 3a:: einen Schnitt durch ein Wasserbevorratungs-System in der Schnittebene C - C in Richtung der oben liegenden Trennwand (ohne Versorgungstunnel);
- Fig. 3b:: einen Schnitt durch eine Trennwand in der Schnittebene A - A;
- Fig. 4:: einen Ausschnitt der Wandung des Speicherraums.

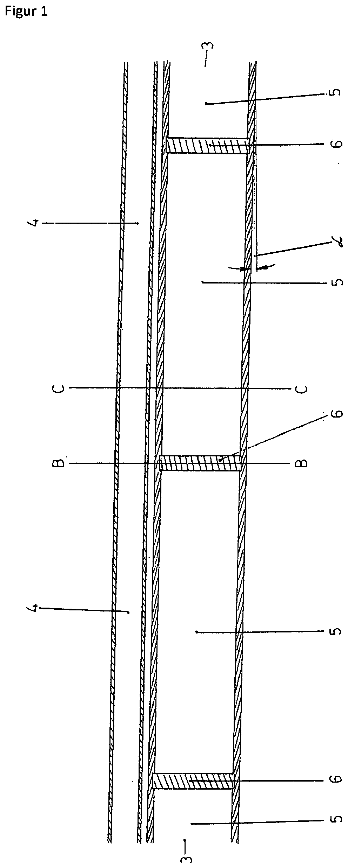

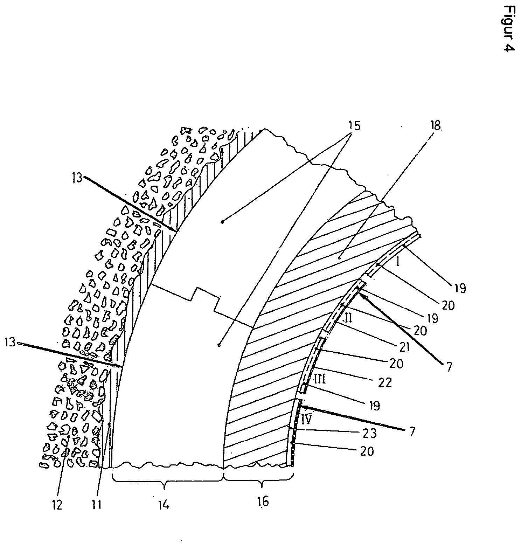

Anmerkung: Fig. 1 bis Fig. 4 zeigen im Maßstab eine bevorzugte Ausführungsform des Wasserbevorratungs-Systems mit einem Schilddurchmesser von 12 m, wobei vielfach Erfahrungswerte zugrunde liegen. Durch abweichende vor-Ort-Bedingungen, die beispielsweise auf tektonischen, geologischen und statischen Grundlagen beruhen, ergeben sich Fall bezogen andere Spezifikationen. Aus Darstellungsgründen ist der Radius des Schilddurchmessers in Fig. 4 nicht maßstäblich, ebenso die unter den Ziffern I-IV angegebenen Darstellungsformen für den auf der stabilisierenden Innenwand aufgetragene weitere Schichtenaufbau.

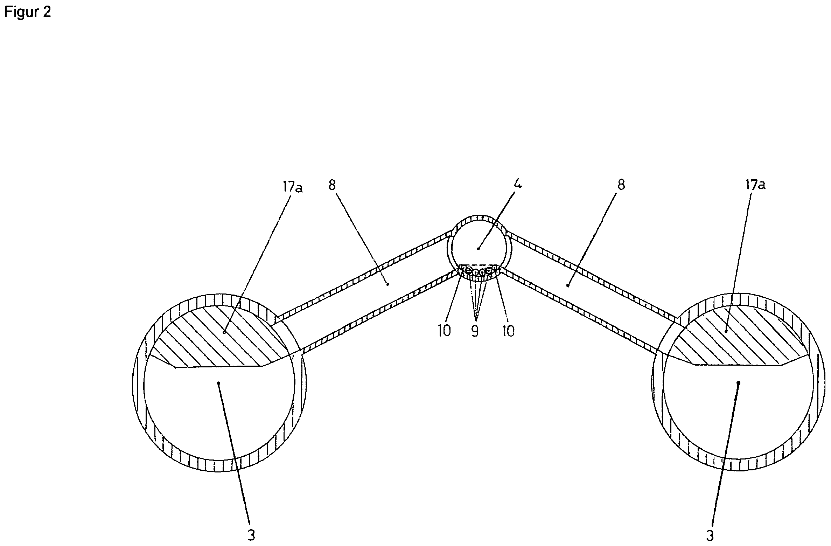

Fig. 1 zeigt eine Seitenansicht des erfindungsgemäßen Systems in Längsrichtung mit einem Speicherraum 3, der in der hier dargestellten Ausführungsform von einer Tunnelröhre gebildet und in Segmente, in Speichereinheiten 5, unterteilt ist. Oberhalb des Speicherraums 3 ist ein Versorgungstunnel 4 geordnet, von dem Zugänge 8 (siehe Fig. 2) in jede Speichereinheit 5, und zwar zu den Trennwänden 6 (siehe Fig's. 2, 3b) der Speichereinheiten 5 ausgehen. Der Bau dieser Tunnelröhren 3 in den Untergrund/in das Gestein kann mittels den im Tunnelbau und/oder Bergbau bekannten Technologien erfolgen. Vorzugsweise wird der Tunnel bzw. die Tunnelröhre von einem geeigneten Ausgangspunkt unterirdisch vorangetrieben, und zwar mit einer Länge, die dem gewünschten Speichervolumen des Speicherraums 3 in Abhängigkeit des Innendurchmessers einer Speichereinheit entspricht. Wird der Speicherraum 3 in Form von Tunnelröhren mittels der aus dem Stand der Technik bekannten Tunnellingvortriebstechnik gebaut, so hat sich ein Schilddurchmesser der Tunnelbohrmaschine zwischen 10 und 14 m nach dem aktuellen Stand der Technik als vorteilhaft erwiesen. Der in Fig. 1 dargestellte Speicherraum 3 weist, ausgehend vom Zufluss des zu speichernden Wassers einen Steigungswinkel α auf, der in Abhängigkeit vom vorgegebenen Speichervolumen von bis zu 3500 m³ pro Speichereinheit 5 und deren Innendurchmesser nach Berechnungsgrundlagen etwa zwischen 1 und 2 Winkelgrad betragen kann, was je nach Ausführungsform nach oben und unter schwanken kann. Wegen des Wasserspiegels ergibt sich aufgrund der Steigungswinkels α eine von Wasser nicht benetzte Fläche an der oberhalb jeder Speichereinheit 5 befindlichen Trennwand 6, die als verschließbare Öffnung 17b für die untere Speichereinheit 5 dient. Dies erweist sich aus Betriebs-, Service- und Sicherheitsgründen als vorteilhaft und bildet eine der Berechnungsgrundlagen für den Steigungswinkel α des Speicherraums 3, wobei diese Öffnung 17b mindestens 1 m in der Höhe betragen sollte.

Die Länge des Speicherraums 3 bzw. der Speicherröhre richtet sich nach der gewünschten Speichermenge in Abhängigkeit des Wasseraufkommen nach dem "worst case" pro Jahr unter Berücksichtigung langfristiger Niederschlagserwartungen, falls es sich nicht um Verbundsysteme zur Wasserversorgung handelt. Aus ökonomischen Gründen besteht der gesamte Speicherraum 3 aus zwei möglichst parallel verlaufenden Speicherräumen 3, denen jeweils ein Versorgungstunnel 4 zugeordnet ist, vorzugsweise knapp oberhalb des Wasserspiegels des Speicherraums 3 bzw. der einzelnen Speichereinheiten 5, um gleichzeitig standardisierte Voraussetzungen zur Betriebssicherheit des Speichersystems insgesamt zu erfüllen. Insofern kann von einer Systementwicklung unter kosteneffizienten Kriterien ausgegangen werden.

Je nach den örtlichen Verhältnissen kann es sich entsprechend des gewünschten Speichervolumens beim Speicherraum 3 um Blindtunnels, an deren Ende sich lediglich ein Ausstieg befindet, oder um Durchstichtunnels handeln. Im Falle von Durchstichtunnels muss der Ort des Durchstichs, beispielsweise durch ein Gebirge, in Abhängigkeit des vorgesehenen Speichervolumens bzw. des Innendurchmessers der Speicherröhren so gewählt werden, dass dieser mit dem Steigungswinkel α des Speicherraums 3 korreliert. Ansonsten muss ein ansteigender und ab einem berechneten Abschnitt absteigender Tunnelvortrieb unter Einhaltung des Steigungswinkels α vorgenommen werden. Gleiches kann auch in den Untergrund erfolgen, falls günstige geographische Bedingungen bestehen.

Legt man z. B. bei einer regionalen Versorgung von 4000 Einwohnern einen Verbrauch von 110 Liter Wasser pro Einwohner und Tag zugrunde, um die Trink- und ggf. Nutzwasserversorgung zu sichern, was für die ländliche Siedlungstätigkeit arabischer Staaten als auch in Schwellen- und Industrieländern realistisch ist, weniger für Entwicklungsländer, müssten etwa 160.000 m³ Wasser pro Jahr nach dem "worst case" zur Verfügung stehen. Vor diesem Hintergrund würde sich, wenn man zwei Speicherräume 3 pro Speichersystem betreibt (siehe Fig. 2), bei einem Schilddurchmesser von 12 m abzüglich der Wandung, eine Speicherröhrenlänge von etwa jeweils 1000 m ergeben.

Das üblicherweise in subtropischen semiariden Regionen meist durch Starkregen anfallende Wasser, das über wasserbauliche Maßnahmen in ausgewählten Wassereinzugsgebieten gewonnen wird, wird über Zwischendämme und im Hauptdamm zwischengespeichert und dem erfindungsgemäßen Wasserbevorratungs-System über geeignete Bei- und/oder Zuleitungen, die das Wasser in die Zuleitungsrohre 9 im Versorgungstunnel 4 führen, zugeleitet. Die Zuleitungsrohre 9 sollten in Anzahl und Querschnitt den Anforderungen entsprechen. Gefasstes Wasser kann zuvor über geeignete wasserbauliche Maßnahmen, beispielsweise über Gabionen und/oder selbstreinigende Zwischendämme, sowie über zusätzliche Vorfilter ganz oder teilweise von Sediment und/oder Schwebstoffen befreit werden. Das so vorgereinigte Wasser wird anschließend in das Wasserbevorratungs-System geführt und gespeichert.

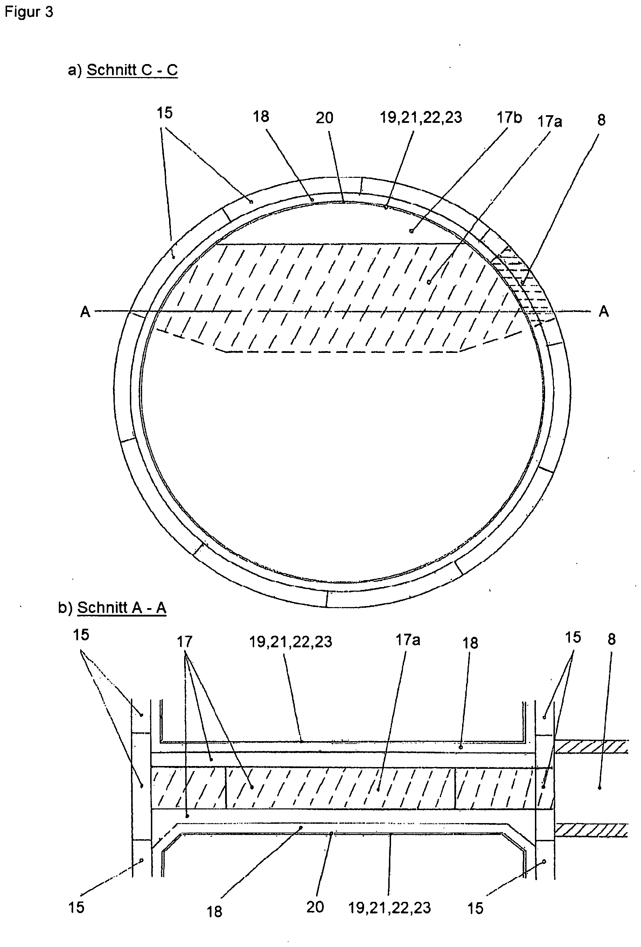

Der Speicherraum 3 ist über die gesamte Länge des Speicherraumes in einzelne Speichereinheiten 5 unterteilt, da erfahrungsgemäß über kleinere Speichervolumen die Wasserqualität besser zu beherrschen ist. Die Aufteilung in Speichereinheiten 5 erfolgt durch Trennwände 6 (siehe Fig. 3b). Diese Trennwände 6 bestehen aus einem Grundkörper 17, welcher aus statischen Gründen unterschiedliche Ausführungsformen haben können. Dieser Grundkörper 17 ist mit den Tübbingen 15 der Außenwand 14 verankert, wozu entsprechende Vorrichtungen nach Berechnungsgrundlagen je nach örtlichen Bedingungen in die Tübbinge 15 der Außenwand 14 verteilt eingebracht und/oder angebracht werden (nicht abgebildet). Die Grundkörper 17 der Trennwände 6 enthalten vorzugsweise oberhalb ihrer oberen Hälfte Aussparungen 17a, um darin Saugpumpen für die Wasserentnahme, für den Druckausgleich zwischen benachbarten Speichereinheiten 5 und für die Umwälzung des gespeicherten Wassers zu platzieren und bei Bedarf Filteranlagen zu installieren. Diese Aussparungen führen einerseits zur Material- und Gewichtsreduzierung, andererseits wird die Unterbringung von Messsonden, Sensoren und technischen Anlagen sowie ein direktes Controlling des gespeicherten Wassers ermöglicht, da zusätzlich Sichtkontakt durch eine Öffnung 17b, die durch eine Vorrichtung verschließbar ist, zur tiefer liegenden Speichereinheit besteht. Diese Öffnung 17b erlaubt auch den Einstieg in die tiefer gelegene Speichereinheit im Bedarfsfall. Die Trennwände 6 können Vorrichtungen enthalten (hier nicht dargestellt), mit denen Wasser aus einer Speichereinheit direkt in die nächste Speicherkammer transportiert werden kann, beispielsweise über Schieber, Ventile oder Pumpen sowie Öffnungen bzw. Schleusen für den Notausstieg im Gefahrenfall (nicht abgebildet).

Darüber hinaus enthält jede einzelne Speichereinheit 5 voneinander getrennte Vorrichtungen zur Aufnahme von Wasser und Vorrichtungen zur Entnahme von Wasser, so dass die Speichereinheiten 5 jeweils getrennt voneinander befüllt oder geleert werden können, die über IT-Lösungen getrennt oder simultan bedient werden können.

Der Zugang zur Aussparung 17a der Trennwände 6 erfolgt über einen Verbindungstunnel 8 vom gemeinsamen Versorgungstunnel 4 aus (siehe Fig. 2 und Fig. 3), der sowohl über Verbindungselemente mit den Tübbingen des Speicherraums 3 als auch mit den Tübbingen des Versorgungstunnels 4 fixiert werden kann, indem Vorrichtungen zur Fixierung in diese Tübbinge eingebracht sind und/oder an diese angebracht werden können. Der Verbindungstunnel 8 enthält u. a. die Zu- und Ableitungen des Wassers zu benachbarten Speichereinheiten 5. Die Verbindungstunnel 8 sind so ausgelegt, dass die erforderlichen Zuleitungsrohre 9 und Entnahmerohre 10 sowie sonstige technische Ausstattungen installiert werden können (nicht abgebildet), sich das Servicepersonal ungehindert bewegen kann und der Materialaustausch problemlos möglich ist.

Vorzugsweise wird der Speicherraum 3 bzw. die Speicherröhre über die einzelnen Speichereinheiten 5 so gefüllt, indem das Wasser über entsprechende Zuleitungsrohre 9 in die erste tiefer liegende Speichereinheit eintritt und das Wasser von der ersten Speichereinheit 5 nach und nach in die nächste daran anschließende höhere Speichereinheit 5 gelangt, bis der gesamte Speicherraum 3 gefüllt ist. In diesem Falle muss nach Füllen jeder Speichereinheit 5, also wenn der Füllstand der tiefer gelegenen Trennwand 6 den Innendurchmesser dieser Speichereinheit erreicht hat, der Zufluss in diese Speichereinheit 5 gestoppt werden und die direkte Verbindung zur der nächst höher gelegenen Speichereinheit 5 getrennt werden, damit der Wasserdruck 7 auf die Speicherwände so gering wie möglich gehalten wird. Der Wasserzulauf erfolgt dann über den Verbindungstunnel 8 über die nächst höher gelegene Speichereinheit 5. Dieser Füllvorgang kann andererseits über die Systemsteuerung so erfolgen, dass jede einzelne Speichereinheit 5 gesondert gefüllt werden kann, indem gleichzeitig ein Druckausgleich zwischen den einzelnen Speichereinheiten 5 hergestellt wird, um die Trennwände 6 durch den Wasserdruck so wenig wie möglich zu belasten. Die Entnahme des Wassers kann dann wiederum über die hydrostatisch am höchsten liegende Speichereinheit 5 erfolgen. Das verbleibende Wasser fließt gemäß des Gefälles der Tunnelröhre zum Tunnelausgang unter Druckausgleich zwischen den einzelnen Speichereinheiten von oben nach oder jede Speichereinheit kann über die Systemsteuerung einzeln, unter Druckausgleich zwischen den jeweiligen Speichereinheiten, entleert werden.

Für das erfindungsgemäße Wasserbevorratungs-System hat es sich als vorteilhaft erwiesen, wenn der Tunnelvortrieb mit einem Steigungswinkel α von etwa 1 bis 2 Winkelgrad nach oben bzw. in ein Gebirgsmassiv oder in den Untergrund erfolgt, abhängig von der Länge einer Speichereinheit 5, die sich aus dem Innendurchmesser einer Speichereinheit 5 und dem vorgegebenen Volumen einer Speichereinheit 5 ergibt. Zur Minimierung des Wasserdrucks 7 auf die Trennwände erweist es sich also als vorteilhaft, dass der Steigungswinkel α des Tunnelvortriebs so gewählt wird, dass der Wasserspiegel einer jeder Speichereinheit 5 bei Vollfüllung nicht höher als der innere bzw. lichte Durchmesser der tiefer liegenden Trennwand 6 ist und offener Zugang über mindestens 1 m Öffnung über die oben liegende Trennwand 6 besteht.

Der gleiche Steigungswinkel α wie beim Tunnelvortrieb für die Speicherräume 3 muss aus ökonomischen gründen auch beim Tunnelvortrieb für den Versorgungstunnel 4 eingehalten werden, wozu die Tunnellingvortriebstechnik ebenfalls eingesetzt werden kann. Aus Gründen der Kosteneffizienz und zur Verhinderung von Überflutung muss der Versorgungstunnel 4 knapp oberhalb des Wasserspiegels der Speicherräume 3 bzw. der einzelnen Speichereinheiten 5 bei Vollfüllung liegen (siehe Fig. 1). Da die Länge des Versorgungstunnels 4 abhängig vom vorgegebenen Speicherraum 3 und dem Innendurchmesser einer Speichereinheit 5 ist, sollte eine ökonomische Abwägung zwischen dem Schilddurchmesser für den Speicherraum 3 und der daraus resultierenden Länge des Versorgungstunnels 4 zuvor getroffen werden.

Um sicherzustellen, dass vor allem bakterielle Kontaminationen des gespeicherten Wassers verhindert werden, sollten die Speichereinheiten 5 eine gewisse Größe nicht überschreiten. Erfahrungsgemäß liegen diese Volumina bis höchstens 3500 m³. Diese Volumina haben in Abhängigkeit des Innendurchmessers einer Speichereinheit 5 Einfluss auf den Steigungswinkel α des Speicherraums 3 bzw. auf den Steigungswinkel α des Tunnelvortriebs, falls ein freier Zugang von der oberen Trennwand 6 in die unterhalb gelegene Speichereinheit 5 vorgesehen ist.

Die Unterteilung des gesamten Speicherraums 3 in viele Speichereinheiten 5 hat den Vorteil, sofern an oder in einer Speichereinheit 5 Reparaturen erforderlich sein sollten oder ähnliche Arbeiten, diese Speichereinheit 5 für die Wasserbevorratung gesperrt werden kann, d. h. vollständig geleert werden kann, ohne dass das gesamte gespeicherte bzw. bevorratete Wasser vollständig aus dem Speicherraum 3 entfernt werden muss.

Ein weiterer Vorteil ist, sofern gespeichertes Wasser in einer Speichereinheit 5 kontaminiert ist und routinemäßige Methoden und Verfahren versagen, nur diese Kammer vom gesamten Speichersystem abgetrennt werden muss und nicht das gesamte Speichersystem betroffen ist, was i. d. R. nur einen der beiden Speicherräume 3 bzw. Speicherröhren betrifft (siehe Fig. 2). Dadurch kann die kontaminierte Speichereinheit 5 über geeignete Verfahren (z. B. Stoßchlorierung) wieder nutzbar gemacht werden. Andererseits kann dieses Wasser durch gesonderte Verfahren dekontaminiert und nach Entchlorung für andere Zwecke verwendet werden.

Für den Zufluss und die Entnahme des Wassers sind im Versorgungstunnel 4, der oberhalb des Wasserspiegels des Speicherraums 3 bzw. der Speichereinheiten 5 liegt, entsprechende Vorrichtungen vorgesehen, welche über Verbindungstunnels 8 mit jeder Trennwand 6 des gesamten Speicherraums 3 verbunden sind, um benachbarte Speichereinheiten 5 zu versorgen. Andererseits befinden sich solche Vorrichtungen ergänzend innerhalb der Aussparungen 17a der Trennwände 6, zu denen Zugang über die Verbindungstunnel 8 besteht.

Fig. 2 zeigt den Querschnitt des erfindungsgemäßen Systems aus Fig. 1. Das in Fig. 2 dargestellte Wasserbevorratungs-System besteht aus ökonomischen Gründen aus zwei Speicherräumen (Speicherröhren) 3, die in der hier dargestellten Ausführungsform nach Art von Tunnelröhren gestaltet sind. Der Wasserzulauf in die Speichereinheiten 5 des Speicherraums 3 erfolgt über die im Versorgungstunnel 4 angeordneten Zuleitungsrohre 9. Von den Zuleitungsrohren 9 wird das Wasser über entsprechende von den Zuleitungsrohren 9 abgehende weitere Rohre, die in den Verbindungstunnel 8 in Richtung der Trennwände des Speicherraums 3 laufen, in die jeweiligen Speichereinheiten 5 geleitet. Im gesamten Speicherraum 3 bzw. in den einzelnen Speichereinheiten 5 wird das Wasser bis zur Entnahme gelagert. Die Entnahme des Wassers aus den Speichereinheiten 5 erfolgt über entsprechende Entnahmerohre 10, die ebenfalls in den Verbindungstunnels 8 angeordnet sind, wobei von dort aus das Wasser in die größeren Entnahmerohre 10 im Versorgungstunnel 4 abgeleitet und zur Kontrollstation am Eingang des Speichersystems (hier nicht dargestellt) geführt wird. Die Entnahme des Wassers kann über entsprechende Pumpen erfolgen, wobei übliche aus wasserbaulichen Maßnahmen bekannte Pumpen, i. d. R. Saugpumpen eingesetzt werden können.

In der hier dargestellten Ausführungsform weisen die beiden Speicherräume 3 bzw. Speicherröhren einen solchen Abstand auf, der im worst case erfahrungsgemäß dem doppelten Schilddurchmesser der Tunnelbohrmaschine entsprechen sollte (siehe Fig. 2: betrifft 2D max), ansonsten etwa die Hälfte davon. Der Versorgungstunnel 4 ist vorzugsweise knapp oberhalb des Wasserspiegels des Speicherraums 3 der einzelnen Speichereinheiten 5 angeordnet. Dadurch wird verhindert, dass rückstauendes Wasser aus dem Speicherraum 3 bzw. aus den Speichereinheiten 5 ungewollt in den Versorgungstunnel 4 dringt. Der Versorgungstunnel weist vorzugsweise eine solche Größe auf, dass er von Menschen betreten werden kann, diese dort aufrecht stehen können, bei Bedarf der Transport von Material und Austauschanlagen mit kleinen Transportfahrzeugen möglich ist und genügend Platz für die technischen Ausstattungen und erforderlichen Installationen besteht. Der Versorgungstunnel 4, der der Einfachheit halber über die Tunnellingvortriebstechnik unter Tübbingimplementierung erstellt werden kann, dient deshalb nicht nur zur Aufnahme der Zuleitungsrohre 9 und Entnahmerohre 10 des Wassers sowie zur Installation der technischen und elektrischen Anlagen sondern auch zum Betrieb und zur Überwachung des Betriebs des erfindungsgemäßen Systems einschließlich für Wartungs- und Reparaturarbeiten des gesamten Speichersystems. Die Systementwicklung beruht insofern auf einer Standardisierung nach den Kriterien der Kosteneffizienz und der Nachhaltigkeit.

Die durch den Tunnelvortrieb angeschnittenen Aquifere, die permanent oder temporär Wasser führen können, sind für die Wassergewinnung durchaus nutzbar, falls Beeinträchtigungen von Quellfassungen im Wassereinzugsgebiet ausgeschlossen werden können. Aus technischen Gründen eignen sich für diesen Zweck weniger die durch den Tunnelvortrieb angeschnittenen Aquifere für die Speicherräume 3, mehr die durch den Versorgungstunnel 4 angeschnittenen Aquifere. Derartige Aquifere werden ggf. bei den für den Tunnelvortrieb erforderlichen geologischen Untersuchungen mit erfasst, wozu u. a. Probebohrungen entlang der Tunneltrasse vorgenommen werden, oder werden während des Tunnelvortriebs festgestellt. Existieren solche Aquifere, werden diese aufgrund der wasserbaulichen Maßnahmen, die zur Gewinnung der Wasserressourcen aus saisonalen Niederschlägen notwendig werden, zusätzlich angereichert, wobei die Wassereinzugsregionen in semiariden Regionen üblicherweise oberhalb von 25 km2 liegen. Da das Wasserbevorratungs-System i. d. R. im Untergrund dieser Wassereinzugsregion positioniert ist, werden die durch den Tunnelvortrieb angeschnittenen Aquifere über die wasserbaulichen Maßnahmen mit gespeist.

Zur Gewinnung der Wasserressourcen aus solchen Aquiferen erweist es sich als vorteilhaft, dass innerhalb denjenigen Tübbinge, die vorzugsweise die Unterseite des Versorgungstunnels 4 bilden, spezifische in ihrer Funktionsweise unterschiedliche Vorrichtungen angeordnet und eingebracht sind, die eine Einleitung von Wasser aus einem Aquifer von außerhalb in den Versorgungstunnel 4 ermöglichen, wasserbauliche Maßnahmen erlauben, einen wasserdichten Verschluss gegen Wassereinbruch von außen gewährleisten, als auch den Anschluss von ableitenden Röhren zur Speicherung dieser Wasserressourcen über gesonderte Zuleitungsrohre 9 in die Speichereinheiten 5 ermöglichen (nicht abgebildet). Zur Erhaltung der Bausubstanz erweist es sich als vorteilhaft, wenn das Bewehrungsmaterial dieser Tübbinge, die nur dort eingebaut werden, wo Aquifere vorkommen, korrosionsbeständig ist, z. B. aus Glasfasermaterial bestehen und diese Tübbinge so gestaltet sind, dass diese für die übliche Tübbingimplementierung im Rahmen des Tunnelvortriebs verwendet werden können. Da diese Tübbinge auch für wasserbauliche Methoden und Verfahren eingesetzt werden, enthalten diese ggf. sich unterscheidende Vorrichtungen oder sind für diesen Zweck in diese eingebracht, weswegen derartige Tübbinge unterschiedliche Konstruktionen je nach Verwendungszweck aufweisen. Von Vorteil ist, dass über Aquifere gewonnene Wässer auf natürliche Weise gefiltert sind und i. d. R. keine Kontaminationen aufweisen, was zur Kosteneffizienz beiträgt.

Erhöhte Anforderungen an das erfindungsgemäße Wasserbevorratungs-System stellen sich insbesondere beim Speicherbau, da einerseits der tektonische Außendruck 13 durch die Speicherwand abgefangen werden muss, wozu auch Erdbeben im ungünstigsten Fall zählen, andererseits der Innendruck, respektive den Wasserdruck 7 des gespeicherten Wassers, der auf die gesamte Speicherwand von innen einwirkt. Bei wechselnden Feucht- zu Trockenzuständen, was bei dem erfindungsgemäßen Wasserbevorratungs-System i. d. R. der Fall ist, tritt, sofern Baustahl als Bewehrungsmaterial für den Speicherbau verwendet wird, erhöhte Korrosion auf, die mit korrosionsfreiem Bewehrungsmaterial verhindert werden kann. Dazu eignet sich z. B. Glasfaser und Kohlefaser. Weiterhin muss bei ungünstigen pH-Werten des gespeicherten Wassers sowie durch wasserchemische Einflüsse bedingt, insbesondere bei Langzeitspeicherung, mit Materialverlusten bei dem unmittelbar mit dem gespeicherten Wasser in Kontakt kommenden Material gerechnet werden, wodurch die Wasserqualität gleichzeitig mit beeinflusst werden kann. Materialverluste treten darüber hinaus durch mechanische Einflüsse auf, wenn sich z. B. Feinsand in den Speichereinheiten 5 befindet oder Wartungsarbeiten in diesen durchgeführt werden.

Spezifische Anforderungen an das erfindungsgemäße Wasserbevorratungs-System ergeben sich zusätzlich in solchen Regionen, in denen sehr hohe Tagestemperaturen herrschen, wie beispielsweise im arabischen Raum, respektive in tropischen und subtropischen Regionen. Denn in tropischen und subtropischen Regionen liegt die Lagertemperatur, selbst bei unterirdischer Speicherung, i. d. R. oberhalb von 25°C, weswegen Wasserspeicher generell in den Untergrund verlegt werden müssten, was Kontaminationen zwar erschwert, jedoch nicht verhindert. Deshalb sind geeignete Verfahren zur Dekontaminierung einzusetzen, wobei es sich als vorteilhaft erweisen kann, geeignete dekontaminierende Substanzen und/oder Materialien, zumindest zur Reduzierung von bakteriellen, viralen und/oder funguralen Kontaminationen einzusetzen, die als Komponenten dem Baumaterial beigemischt bzw. zugeschlagen werden. Dadurch könnten Kontaminationsherde ebenfalls vermieden werden, die sich in der Bausubstanz bei Langzeitlagerung und höheren Lagertemperaturen des Wassers bilden könnten, zumal in tropischen und subtropischen semiarider Regionen mit Lagerzeiten von bis zu 11 Monaten, also bis zur nächsten Regenzeit gerechnet werden muss. Alle diese Anforderungen erzwingen einen mehrwandigen Aufbau des Speicherraums 3, respektive der einzelnen Speichereinheiten 5.

Ein Beispiel für einen mehrwandigen Aufbau ist in Fig. 4 dargestellt. Beim Vortrieb des Tunnels wird üblicherweise die Tunnelwand, d. h. die Außenwand 14, die in Richtung Gestein 12 reicht, im Rahmen der Tunnellingvortriebstechnik über sogenannte Tübbinge 15 eingebracht. Hierbei handelt es sich vorzugsweise um übliche aus den bei der Tunnellingvortriebstechnik bekannten Tübbingen 15. Zwischen dem Gestein 12 und der Außenwand 14 wird in der hier dargestellten Ausführungsform im Rahmen des Tunnelvortriebs üblicherweise eine Betonfüllung 11 eingebracht. Die Außenwand 14 des Speicherraums 3 mit der Betonfüllung 11 dient in erster Linie dazu, den tektonischen Außendruck 13 abzufangen, die Tübbinge zu stabilisieren und die Außenwand 14 nach innen abzudichten. Die Außenwand 14 bzw. die einzelnen Tübbinge enthalten i. d. R. eine geeignete Bewehrung, die üblicherweise aus Baustahl besteht. Falls keine häufig wechselnden Feucht- zu Trockenzuständen mit dem äußeren Medium auftreten, kann Baustahl als Bewehrung für die Außenwand 14 bzw. für die Tübbinge 15 verwendet werden.

Die Stabilität des gesamten Speicherraums 3 kann dadurch erhöht werden, indem sich in Richtung Innenraum eine stabilisierende Innenwand 18 anschließt, die vorzugsweise die durch den Wasserdruck 7 resultierenden Zugkräfte nach außen abfängt. Diese stabilisierende Innenwand 18 sollte bei Schilddurchmessern des Tunnelvortriebs von über 10 m vorzugsweise mindestens 20 cm betragen sollte, welche eine geeignete, jedoch korrosionsbeständige Bewehrung aufweist. Die Bewehrung der stabilisierenden Innenwand 18 kann beispielsweise eine Glasfaserbewehrung sein, vorzugsweise in Form von Stäben und/oder anderen Körpern aus Glasfasermaterial mit einer geeigneten Betonmischung als Füllmaterial. Zur besseren Materialverbindung mit dem weiteren Schichtenaufbau, betrifft die Innenschicht 19, muss die konkave Seite der stabilisierenden Innenwand 18 keine glatte sondern eine aufgerauhte Oberfläche aufweisen. Im Bedarfsfall kann die stabilisierende Innenwand 18 Vorrichtungen aufweisen, die eine bessere Verbindung mit der Innenschicht 19 gewährleistet und vorzugsweise mit der Bewehrung der stabilisierenden Innenwand 18 verknüpft ist bzw. Teil dieser Bewehrung ist.

Zur Erhaltung der Wasserqualität und der wasserchemischen Materialbeständigkeit schließt sich an die stabilisierende Innenwand 18 ein ein- oder mehrschichtiger Aufbau mit weiteren Schichten 19 bzw. 21 an, wobei die innerste Schicht die Kontaktschicht mit dem Wasser darstellt. Die auf die stabilisierende Innenwand 18 aufgetragene Innenschicht 19 (siehe Fig. 4, I), soweit diese nicht die Kontaktschicht mit dem gespeicherten Wasser bildet, besteht aus einer Spezialzementmischung, die eine geringe Stärke von nur wenigen Zentimetern hat, die gute Beständigkeit aufweist, also nicht nur materialbeständig gegen wasserchemische Einflüsse ist sondern zusätzlich beständig gegen mechanischen Einflüsse ist. Vorzugsweise sollte die Innenschicht 19 auch eine dekontaminierende Wirkung haben, sofern auf Innenbeschichtungen 21 verzichtet wird.

In einer möglichen Ausgestaltung kann die Innenschicht 19 mit einer korrosionsfreien und elektrisch leitenden Bewehrung 20 verstärkt werden, vorzugsweise aus Texilbeton, wozu sich z. B. Carbongrids eignen, die über Verbindungselemente (nicht dargestellt) miteinander vernetzt werden. Es wurde festgestellt, dass die Innenschicht 19, mit Carbongrids 20 verstärkt, quasi wie ein Faradayscher Käfig wirkt und den Speicherraum wie einzelne Speichereinheiten abschirmt bzw. unerwünschte Ströme, wie z. B. Kriechströme, über geeignete Vorrichtungen ableiten kann (nicht dargestellt). Dies gilt auch für auftretende Überspannungen (siehe Fig. 4, I).

Um die Stabilität der Innenschicht 19 gegen mechanische und statische Belastungen zu erhöhen, kann es vorteilhaft sein, Carbonfasern der Spezialzementmischung der Innenschicht 19 und/oder den Innenbeschichtungen 21 beizufügen, soweit diese nicht die Kontaktschicht mit dem gespeicherten Wasser bildet. Diese Carbonfasern erhöhen die mechanische Festigkeit von Betonmischungen als auch von Spezialzementmischungen oder Mörtelmischungen. Wegen des Verbundes dieser Carbonfasern zu Bauteilen werden diese üblicherweise in Kunststoff getränkt, was darüber hinaus zu einer besseren Bindung der Carbonbauelemente mit Betonmischungen, Spezialzementmischungen oder Mörtelmischungen führt, gleichzeitig die Verarbeitung der Carbonfasern erleichtert. Mit dieser Methode kann die mechanische Festigkeit der betroffenen Schichten deutlich erhöht werden. Aus bauphysikalischen Gründen erweist es sich als vorteilhaft, einen Kunststoff oder eine für den Verband von Carbonfasern geeignete Substanz zu verwenden, die möglichst keine Kohlenwasserstoffe freisetzen. Um dies zu verhindern, sollte mit Carbonbauelementen verstärkte Schichten in der mit dem gespeicherten Wasser in Verbindung kommenden Schicht ohne Zusätze an Carbonbauelementen eine weitere Schicht aufgetragen werden, wobei die Spezialzementmischung oder die Mörtelmischung in ihren Mischungen einander weitgehend entsprechen.

Die Stärke des Carbonfaserverbundes kann je nach Verwendung, ob diese der Innenschicht 19 oder der/den Innenbeschichtung(en) 21 zugeschlagen werden, vorzugsweise bis zu 1 mm Stärke betragen und in ihrer Länge vorzugsweise so bemessen sein, dass diese knapp unterhalb der jeweiligen Schichtstärken 19, 21 liegen. Dabei ist es unerheblich, ob die Carbonbauelemente einer Betonmischung, einer Spezialzementmischung oder einer Mörtelmischung zugeschlagen werden. In Ausnahmen können Carbonbauelemente auch der stabilisierenden Innenwand 18 zugeschlagen werden, wodurch sich deutlich höhere Kosten ergeben als beispielsweise durch Verwendung von Glasfaserbauelementen. Zur Optimierung der mechanischen Festigkeit muss je nach Verwendungszweck und Schichtstärke der Zuschlag an Carbonelementen gesondert bestimmt werden. In ähnlicher Weise können Glasfaserbauelemente zur Anwendung kommen, wobei bekannte Materialien als Verbindungsmaterial der einzelnen Glasfasern die Glasfaserbauelemente bilden.

Eine dekontaminierende Wirkung, die vorzugsweise in die mit dem gespeicherten Wasser in Kontakt kommenden Schicht eingebracht wird, kann beispielsweise durch Zusatz von geeigneten Ionen bildenden Materialien und/oder dekontaminierende Substanzen erreicht werden, die beispielsweise Cu- und Ag-Ionen bilden können, wobei diese Zusätze auch in Form von Nanopartikeln vorliegen können. Die Konzentration dieser Zusätze an dekontaminierenden Materialien und/oder Substanzen, ob diese gegen bakterielle, virale oder fungurale Kontaminationen eingesetzt werden, richten sich, soweit bekannt, nach Erfahrungswerten. Dies betrifft vorzugsweise die Innenschicht 19 oder darauf aufgetragene weitere Innenbeschichtungen 21, soweit diese die Kontaktschicht mit dem gespeicherten Wasser darstellt. Für die Kontaktschicht mit dem gespeicherten Wasser eigne sich für Innenauskleidungen u. a. die für Wasserspeicher übliche Mörtelmischungen, die auf die Innenschicht 19 oder auf eine der Innenbeschichtungen 21 aufgetragen werden.

In einer weiteren Ausführungsform kann es vorteilhaft sein, bei besonderer mechanischer und/oder wasserchemischer Beanspruchung auf die Innenschicht 19 mehr als eine Innenbeschichtung 21 aufzutragen, die vorzugsweise nur wenige Millimeter betragen kann/können (siehe Fig. 4, II). In diesem Falle erweist es sich als vorteilhaft Zusätze an dekontaminierenden Substanzen beizumengen, die eine höhere Konzentration als andere Schichten aufweisen, die jedoch nicht die Kontaktschicht mit dem gespeicherten Wasser bilden. In diesem Falle kann es sich als vorteilhaft erweisen, die Konzentration an dekontaminierenden Substanzen der anderen Schichten 19, 21 zu reduzieren oder darauf ganz zu verzichten.

Als Alternative zu dieser (diesen) Innenbeschichtung(en) 21 kann es in einer weiteren Ausführungsform vorteilhaft sein, anstelle der Innenbeschichtung(en) 21 auf die Innenschicht 19 eine Verplattung 22 aufzubringen (siehe Fig. 4, III), die z. B. aus Keramik oder einer anderen Herstellungsart besteht (z. B. Feinsteinzeug, gebrannter Ton). Zur Sicherung der Bestandsfähigkeit sollten solche Bauelemente auf der der Innenschicht 19 zugewandten Seite Vorrichtungen enthalten oder in ihrer Form und Größe so gestaltet sein (nicht abgebildet), dass diese ein Ablösen möglichst erschweren. Neben dem erhöhten Härtegrad auf der mit dem gespeicherten Wasser in Kontakt tretenden Schicht, kann die Oberfläche dieser Bauteile zusätzlich hydrophobe und/oder Schmutz abweisende Eigenschaften haben, was z. B. über Nanotechnologien erreicht werden kann. Ist dies nicht möglich, kann es sich als vorteilhaft erweisen, dass die dem gespeicherten Wasser zugewandte Seite glatt geschliffen und/oder poliert ist.

In einer weiteren Ausführungsform zur Gestaltung der Innenschicht 19, unter Verzicht auf Innenbeschichtungen 21, kann es vorteilhaft sein, dass die Innenschicht 19 aus einer Verplattung 22 besteht. Da üblicherweise derartige Baumaterialien, wie Fließen, wegen der besseren Verarbeitung miteinander netzverklebt sind, ist es vorteilhaft anstelle eines solchen Trägernetzes ein korrosionsfreies Grid zu verwenden, das hohe Materialbeständigkeit und gute Eigenschaften als Bewehrungsmaterial besitzt, gleichzeitig Elektronen leitet, wozu sich beispielsweise Kohlefasern bzw. ein Carbongrid eignet. Die einzelnen Platten oder Bauteile, die auf dem korrosionsfreien und elektrisch leitenden Grid durch geeignete Netzverkleber aufgebracht werden, also eine Carbonnetzverplattung 23 darstellen (siehe Fig. 4, IV), werden mit geeigneten Füll- und Fugenmaterialien auf die stabilisierende Innenwand 18 aufgebracht, bildet also die Innenschicht 19, was Innenbeschichtungen 21 überflüssig macht.

Als vorteilhaft erweist sich eine dekontaminierende Wirkung des Füll- und/oder Fugenmaterials, das üblicherweise eine Spezialbetonmischung ist, für Verplattungen 22 einschließlich für Carbonnetzverplattungen 23 durch Zusatz von geeigneten Ionen bildenden Materialien und/oder dekontaminierende Substanzen, die auch als Nanopartikel vorliegen können, in das Füll- und/oder Fugenmaterial. Dieser Zusatz bzw. Zusätze kann/können beispielsweise Cu- und Ag-Ionen bilden. Die Konzentration dieser Zusätze an dekontaminierenden Materialien und/oder Substanzen, ob diese gegen bakterielle, virale oder fungurale Kontaminationen eingesetzt werden, richten sich, soweit bekannt, nach Erfahrungswerten, wobei diese Zusätze bei Fugenmaterial höhere Konzentrationen aufweisen können. Wird eine Verplattung 22 anstelle einer Innenbeschichtung 21 gewählt, kann es sich als vorteilhaft erweisen, die Konzentration an dekontaminierenden Zusätzen der Innenschicht 19 zu reduzieren oder darauf ganz zu verzichten, falls es sich um eine Carbonnetzverplattung 23 handelt.

Die Verwendung geeigneter Ionen bildender Materialien zur Dekontaminierung und/oder von dekontaminierenden Substanzen als Zusatz in Baumaterialien, vorzugsweise in Spezialzementmischungen, in Füll- und Fugenmaterial oder in Mörtelmischungen, kann bei der Verarbeitung Probleme bereiten als auch höhere Kosten verursachen. Deshalb erweist es sich als vorteilhaft, diese an einen Träger zu binden und/oder in diesen einzubringen und/oder anzulagern. Wird dieser/diese Zusatz/Zusätze in einen Träger eingebracht, eignen sich solche Träger, in denen diese Zusätze sich einlagern können. Hierfür kommen Materialien mit bestimmter Mikrostruktur infrage, wie z. B. Keramik, gebrannter Ton und/oder amorphe Materialien, die vorzugsweise in runder Form bis in den mm- Bereich vorliegen sollten, ggf. in Nanostruktur. Können derartige Träger mit dekontaminierenden Materialien und/oder dekontaminierenden Substanzen nicht im Rahmen ihrer Herstellung produziert werden, könnten diese beispielsweise durch Tränken und/oder über Unter- oder Überdruckverfahren eingebracht werden. Weiterhin ist es möglich dekontaminierende Materialien und/oder dekontaminierende Substanzen ausschließlich oder zusätzlich auf der Oberfläche von Trägern aufzubringen, wozu sich Träger mit verdichteter Materialstruktur ggf. besser eignen. Außerdem ist es möglich dekontaminierende Materialien und/oder dekontaminierende Substanzen durch Liganden an Träger vorzugsweise an ihrer Oberfläche zu binden, die durch ihre chemische oder biologische Oberflächenstruktur dekontaminierend wirkt. Träger, die mit dekontaminierenden Materialien und/oder dekontaminierenden Substanzen ausgestattet sind, dienen somit als Depot, mit dem Vorteil, dass Zusätze an dekontaminierende Materialien und/oder dekontaminierenden Substanzen, die an Träger gebunden sind, für Baumaterialien besser verarbeitet werden können, sich nicht oder weniger selbst verbrauchen und dadurch Kosten eingespart werden können.

Grundsätzlich ist es erforderlich die Wasserqualität des bevorratenden Wassers zu sichern, indem Vorsorge gegen Kontaminationen getroffen wird. Ein bekanntes Verfahren ist beispielsweise Elektroden in den jeweiligen Speicherkammern 5 anzuordnen, die Ag-Ionen oder Cu-Ionen oder andere bakterizid, antiviral und/oder fungizid wirkende Ionen bilden können.

Ein ebenfalls bekanntes Verfahren zur Vorsorge gegen Kontaminationen wie zur Dekontaminierung ist die UV-Bestrahlung. Zu diesem Zweck werden UV-Quellen, die in der Energie variieren können, über spezifische Vorrichtungen vorzugsweise an den jeweiligen Innenseiten der oberen Trennwände 6 der einzelnen Speichereinheiten 5 nach Berechnungsgrundlagen angeordnet, damit ein Optimum an dekontaminierender Wirkung erreicht wird (nicht abgebildet).

In einer weiteren Ausführungsform zur Vorsorge gegen Kontaminierungen des gespeicherten Wassers kann die dekontaminierende Wirkung von positiven Ladungen bzw. Strömen genutzt werden, was Parasiten, Bakterien, Viren und Pilze eliminieren kann. Dazu werden nach Berechnungsgrundlagen vorzugsweise an den Innenseiten der oberen Trennwände 6 der Speichereinheiten 5 verteilt Elektroden mit positiven Offset-Spannungen angeordnet, die gepulst werden. Es kann sich auch um gesonderte Vorrichtungen handeln, die nicht fest mit der Trennwand 6 verbunden sind (nicht abgebildet).

Als effektive Methode zur Vorsorge gegen Kontaminierungen bzw. zur Dekontaminierung des gespeicherten Wassers gilt die Laserbehandlung. Zu diesem Zweck erweist es sich in einer weiteren Ausführungsform als vorteilhaft, an den Innenseiten der oberen und ggf. unteren Trennwände 6 der Speichereinheiten 5 geeignete über Vorrichtungen Laserquellen anzuordnen, deren Energie ausreicht bzw. so variiert werden kann, um Bakterien, Viren, Mikroben und Algen im Wasser zu vernichten. In diesem Zusammenhang kann es sich als hilfreich erweisen, dass über Vorrichtungen mithilfe von Linsen die Brennweite der Laserpunkte innerhalb der Länge einer Speichereinheit 5 so verändert werden kann, dass sowohl Ort und Größe des Laserpunktes in der gesamten Speichereinheit 5 variiert werden kann als auch die darauf bezogene Energie (nicht abgebildet).

Grundsätzlich ist es erforderlich nach der Entnahme des bevorrateten Wassers eine Wasseraufbereitung für Trinkwasser vorzunehmen, um jegliche Kontaminationen auszuschließen, die nach obigen Methoden nicht beseitigt werden konnten. Zu diesem Zweck werden u. a. semi-permeable Filteranlagen eingesetzt.

Ein weiterer Gegenstand der vorliegenden Erfindung betrifft ein Verfahren gemäß Anspruch 12 zum Aufnehmen und Speichern von Wasser in semiariden Regionen bzw. Trockenregionen einschließlich tropischen und subtropischen Regionen, in welchem Niederschläge, die in der Regel saisonal auftreten, von einem unterirdischen Wasserbevorratungs-System aufgenommen wird, welches umfasst
- eine oder mehrere Vorrichtung(en) zur Erschließung und/oder zur Aufnahme von Wasser aus saisonalen Niederschlägen oder welche zur Bevorratung aus anderen Wasserressourcen stammen,
- mindestens einen Speicherraum (3) zur Speicherung von Wasser, welcher mit Vorrichtungen (9) zur Aufnahme von Wasser verbunden ist,
- einen oder mehrere Vorrichtungen (10) zur Entnahme von Wasser,
das dadurch gekennzeichnet ist, dass der Speicherraum (3) einen mehrwandigen Aufbau (14, 18, 19, 21, 22, 23) hat, wobei die Außenwand (14) eine solche Stabilität hat, dass sie tektonischem Druck (13) standhält und die stabilisierende Innenwand (18) den Wasserdruck (7) sowie tektonische Ereignisse abfangen.

### Bezugszeichenliste

- 3: Speicherraum
- 4: Versorgungstunnel
- 5: Speichereinheit
- 6: Trennwand
- 7: Wasserdruck
- 8: Verbindungstunnel
- 9: Zuleitungsrohr
- 10: Entnahmerohr
- 11: Betonfüllung
- 12: Gestein
- 13: tektonischer Außendruck
- 14: Außenwand
- 15: Tübbinge
- 16: Innenwand
- 17: Grundkörper
- 17a: Aussparung
- 17b: Öffnung
- 18: Stabilisierende Innenwand
- 19: Innenschicht
- 20: Carbongrid
- 21: Innenbeschichtung(en)
- 22: Verplattung
- 23: Carbonnetzverplattung
- α: Steigungswinkel der Speicherraums

## Patentansprüche

1. Wasserbevorratungs-System für semiaride Regionen bzw. Trockenregionen einschließlich für tropische und subtropische Regionen zur Aufnahme und Speicherung von Wasser, wobei das Wasserbevorratungs-System unterirdisch angelegt ist und
- eine oder mehrere Vorrichtung(en) (9) zur Erschließung und/oder zur Aufnahme von Wasser aus saisonalen Niederschlägen oder welche zur Bevorratung aus anderen Wasserressourcen stammen,
- mindestens einen Speicherraum (3) zur Speicherung von Wasser, welcher mit der einen oder mehreren Vorrichtungen (9) zur Aufnahme von Wasser verbunden ist,
- eine oder mehrere Vorrichtung(en) (10) zur Entnahme von Wasser umfasst,
der Speicherraum (3) einen mehrwandigen Aufbau (14, 18, 19, 21, 22, 23) hat, wobei die Außenwand (14) eine solche Stabilität hat, dass sie tektonischem Druck (13) standhält und die stabilisierende Innenwand (18) den Wasserdruck (7) sowie tektonische Ereignisse abfangen, **dadurch gekennzeichnet, dass** die Außenwand (14) von Tübbingen (15) gebildet wird, in welche unterschiedliche Vorrichtungen (9) eingebracht sind oder aufgebracht werden können, die einerseits zur Fixierung der Trennwände (6) mit der Außenwand (14) geeignet sind, andererseits eine Verknüpfung der Außenwand (14) mit einer stabilisierenden Innenwand (18) erlauben, ggf. über spezifische Verbindungselemente.

2. Wasserbevorratungs-System nach Anspruch 1 **dadurch gekennzeichnet, dass** der Speicherraum (3) von Tunnelröhren gebildet wird.

3. Wasserbevorratungs-System nach Anspruch 1 oder Anspruch 2 **dadurch gekennzeichnet, dass** der Speicherraum (3) in voneinander getrennte Speichereinheiten (5) unterteilt ist, die miteinander verbunden werden können, wobei jede Speichereinheit (5) mit einer oder mehreren Vorrichtungen zur Aufnahme (9) und einer oder mehreren Vorrichtungen zur Entnahme von Wasser (10) versehen ist.

4. Wasserbevorratungs-System nach einem der Ansprüche 1 bis 3 **dadurch gekennzeichnet, dass** die Innenwand (16) des Speicherraums (3) bzw. der Speichereinheiten (5) einen zwei- oder mehrwandigen Aufbau aufweist.

5. Wasserbevorratungs-System nach einem der Ansprüche 1 bis 4 **dadurch gekennzeichnet, dass** die stabilisierende Innenwand (18) und die Innenschicht (19) der Innenwand (16) aus Betonmaterial mit korrosionsfreier Bewehrung besteht.

6. Wasserbevorratungs-System nach Anspruch 5 **dadurch gekennzeichnet, dass** die Innenschicht (19) eine Spezialzementmischung oder eine Mörtelmischung ist und dieser Mischung Zusätze an Ionen bildenden Materialien und/oder dekontaminierende Substanzen beigefügt sind, die auch als Nanopartikel vorliegen können, welche beispielsweise Ag- und/oder Cu- Ionen oder andere bakterizid, antiviral oder fungizid wirkende Substanzen bilden können, wobei diese als eine oder mehrere entsprechende Innenbeschichtung(en) (21) auf die Innenschicht (19) aufgetragen ist/sind.

7. Wasserbevorratungs-System nach Anspruch 5 **dadurch gekennzeichnet, dass** in die Innenschicht (19) als Bewehrungsmaterial ein stabilisierendes durch Verbindungselemente vernetztes Grid (20) aus korrosionsbeständigem und stromleitendem Material eingebracht ist, das eine oder mehrere Vorrichtungen aufweist, die Ströme oder Überspannungen ableiten.

8. Wasserbevorratungs-System nach einem der Ansprüche 5 bis 7 **dadurch gekennzeichnet, dass** der stabilisierenden Innenwand (18) eine Innenschicht (19) und oder weitere Innenbeschichtungen (21) mit Ausnahme der mit dem gespeicherten Wasser in Berührung kommenden Kontaktschicht Carbonbauelemente und/oder Glasfaserbauelemente in einer Konzentration beigefügt sind, dass diese entsprechend der Schichtdicke und ihrer Konfiguration optimale positive Auswirkungen auf die mechanische Festigkeit ihrer Konfiguration haben.

9. Wasserbevorratungs-System nach einem der Ansprüche 5 oder 6 **dadurch gekennzeichnet, dass** anstelle der Innenbeschichtung(en) (21) auf die Innenschicht (19) eine Verplattung aufgebracht wird, deren Einzelsegmente in Form und Größe so gestaltet sind und vorzugsweise Vorrichtungen auf deren Rückseite aufweisen, dass ein Ablösen erschwert wird, gleichzeitig die dem gespeicherten Wasser in Kontakt kommende Oberfläche einen hohen Härtegrad aufweist, die bei Bedarf hydrophobe und/oder Schmutz abweisende Eigenschaften hat, ansonsten glatt geschliffen und/oder poliert ist.

10. Wasserbevorratungs-System nach einem der Ansprüche 5 bis 8 **dadurch gekennzeichnet, dass** die Innenschicht (19) und die darauf aufgetragene Innenbeschichtungen (21) von einer Verplattung (22) gebildet werden, die auf stabilisierende Innenwand (18) aufgebracht ist, deren Einzelbauteile auf einem korrosionsbeständigen und stromleitenden Grid (20) fixiert sind, welches sich als Bewehrungsmaterial gut eignet und bestandsfähig ist, die Grids durch geeignete Verbindungselemente miteinander vernetzt sind, also eine Carbonnetzverplattung (23) darstellen, wobei diese Grids (20) eine oder mehrere Vorrichtungen enthalten, die Ströme und Überspannungen ableiten können.

11. Wasserbevorratungs-System nach den Ansprüchen 8 und 9 **dadurch gekennzeichnet, dass** das Füll- und Fugenmaterial für die Verplattung (22, 23) eine Spezialbetonmischung ist bzw. jeweils unterschiedliche Spezialbetonmischungen sind, die Zusätze ggf. unterschiedliche Konzentrationen von Ionen bildenden Materialien und/oder dekontaminierende Substanzen enthalten, die auch als Nanopartikel vorliegen können, welche beispielsweise Ag- und/oder Cu-Ionen oder andere Substanzen enthalten, die bakterizide, antivirale oder fungizide Wirkung ausüben.

12. Verfahren zum Aufnehmen und Speichern von Wasser in semiariden Regionen bzw. Trockenregionen einschließlich tropischen und subtropischen Regionen, in welchem Niederschläge, die in der Regel saisonal auftreten, in dem Verfahren Niederschläge von einem unterirdisch angelegten Wasserbevorratungs-System aufgenommen, in einen oder mehrere Speicherräume weitergeleitet und dort gespeichert werden, wobei das Wasserbevorratungs-System
- eine oder mehrere Vorrichtung(en) zur Erschließung und/oder zur Aufnahme von Wasser aus saisonalen Niederschlägen oder welche zur Bevorratung aus anderen Wasserressourcen stammen,
- mindestens einen Speicherraum (3) zur Speicherung von Wasser, welcher mit Vorrichtungen (9) zur Aufnahme von Wasser verbunden ist,
- einen oder mehrere Vorrichtungen (10) zur Entnahme von Wasser umfasst,
wobei der Speicherraum (3) einen mehrwandigen Aufbau (14, 18, 19, 21, 22, 23) hat, wobei die Außenwand (14) eine solche Stabilität hat, dass sie tektonischem Druck (13) standhält und die stabilisierende Innenwand (18) den Wasserdruck (7) sowie tektonische Ereignisse abfangen und die Außenwand (14) von Tübbingen (15) gebildet wird, in welche unterschiedliche Vorrichtungen eingebracht sind oder aufgebracht werden können, die einerseits zur Fixierung der Trennwände (6) mit der Außenwand (14) geeignet sind, andererseits eine Verknüpfung der Außenwand (14) mit einer stabilisierenden Innenwand (18) erlauben, ggf. über spezifische Verbindungselemente.

## Claims

1. A water storage system for semi-arid regions or arid regions, including for tropical and subtropical regions, for receiving and storing water, which water storage system is placed underground and comprises
- one or more device(s) (9) for the obtaining and/or receiving of water from seasonal precipitation or water which originates from other resources for storage,
- at least one storage space (3) for the storage of water, which is connected to one or more devices (9) for the receiving of water,
- one or more devices (10) for the extraction of water,
the storage space (3) has a multi-walled construction (14, 18, 19, 21, 22, 23), wherein the outer wall (14) has such a stability that it withstands tectonic pressure (13) and the stabilizing inner wall (18) intercepts the water pressure (7) and tectonic events **characterized in that**
the outer wall (14) is formed by tubbings (15) into which different devices (9) are able to be introduced or attached, which firstly are suitable for fixing the separating walls (6) to the outer wall (14) and secondly permit linking of the outer wall (14) to a stabilizing inner wall (18), possibly via specific connection elements.

2. The water storage system as claimed in claim 1, **characterized in that** the storage space (3) is formed by tunnel tubes.

3. The water storage system as claimed in claim 1 or claim 2, **characterized in that** the storage space (3) is subdivided into mutually separate storage units (5) which are able to be connected to one another, wherein each storage unit (5) is provided with one or more devices (9) for the receiving, and one or more devices (10) for the extraction, of water.

4. The water storage system as claimed in one of claims 1 to 3, **characterized in that** the inner wall (16) of the storage space (3) or of the storage units (5) has a two-walled or multi-walled construction.

5. The water storage system as claimed in one of claims 1 to 4, **characterized in that** the stabilizing inner wall (18) and the inner layer (19) of the inner wall (16) consist of concrete material having corrosion-free reinforcement.

6. The water storage system as claimed in claim 5, **characterized in that** the inner layer (19) is a special cement mixture or a mortar mixture, and additions of ion-forming materials and/or decontaminating substances, which may also be present as nanoparticles, which may form for example Ag and/or Cu ions or other bactericidal, antiviral or fungicidal substances, are added to this mixture, or one of more corresponding inner coating(s) (21) is/are applied to the inner layer (19).

7. The water storage system as claimed in claim 7, **characterized in that** a stabilizing grid (20) which is linked by connection elements and which consists of corrosion-resistant and current-conducting material is introduced as reinforcement material into the inner layer (19) and has one or more devices which divert currents or overvoltages.

8. The water storage system as claimed in one of claims 5 to 7, **characterized in that** carbon structural elements and/or glass fiber structural elements are added to the stabilizing inner layer (18), an inner layer (19) and/or further inner coatings (21), with the exception of the contact layer coming into contact with the stored water, to a concentration such that these, according to the layer thickness and the configuration thereof, have optimum positive effects on the mechanical strength.

9. The water storage system as claimed in either of claims 5 and 6, **characterized in that**, instead of the inner coating(s) (21), a plating is attached to the inner layer (19), the individual segments of which plating are designed in shape and size, and preferably have devices on the rear side thereof, such that detachment is made more difficult, at the same time the surface coming into contact with the stored water has a high degree of hardness and, according to requirement, has hydrophobic and/or dirt-repelling properties and is otherwise ground, and/or polished, so as to be smooth.

10. The water storage system as claimed in one of claims 5 to 8, **characterized in that** the inner layer (19) and further inner coatings (21) are formed by a plating (22) which is attached to the stabilizing inner wall (18), whose individual components are fixed on a corrosion-resistant and current-conducting grid (20) which is, as reinforcement material, well suited and capable of resistance, the grids being linked with one another by suitable connecting elements, that is to say constituting a carbon grid plating (23), wherein said grids (20) contain one or more devices which can divert currents and overvoltages.

11. The water storage system as claimed in claims 8 and 9 **characterized in that** the filling and joining material for the plating (22, 23) is a special concrete mixture or are in each case different special concrete mixtures, which contain additions, possibly of different concentrations, of ion-forming materials and/or decontaminating substances, which may also be present as nanoparticles, which contain for example Ag and/or Cu ions or other substances, which exert bactericidal, antiviral or fungicidal effects.

12. A process for receiving and storing water in semi-arid regions or arid regions, including tropical and subtropical regions, in which rainfall, which generally occurs seasonally, in which process the rainfall is received by an underground water storage system wherein the water storage system comprises
- one or more device(s) for the obtaining and/or receiving of water from seasonal precipitation or water which originates from other resources for storage,
- at least one storage space (3) for the storage of water, which is connected to devices (9) for the receiving of water,
- one or more devices (10) for the extraction of water,
wherein the storage space (3) has a multi-walled construction (14, 18, 19, 21, 22, 23), wherein the outer wall (14) has such a stability that it withstands tectonic pressure (13) and the stabilizing inner wall (18) intercepts the water pressure (7) and tectonic events wherein the outer wall (14) has such a stability that it withstands tectonic pressure (13) and the stabilizing inner wall (18) intercepts the water pressure (7) and tectonic events and the outer wall (14) is formed by tubbings (15) into which different devices (9) are able to be introduced or attached, which firstly are suitable for fixing the separating walls (6) to the outer wall (14) and secondly permit linking of the outer wall (14) to a stabilizing inner wall (18), possibly via specific connection elements.

## Revendications

1. Système de stockage d'eau pour des régions semi-arides ou des régions arides, y compris pour des régions tropicales et subtropicales, pour la réception et la séquestration d'eau, le système de stockage d'eau étant aménagé sous forme souterraine et comprenant :
- un ou plusieurs dispositifs (9) pour la viabilisation et/ou la réception d'eau à partir de précipitations saisonnières ou qui provient d'autres ressources en eau pour le stockage,
- au moins un espace de séquestration (3) pour la séquestration d'eau, qui est relié aux un ou plusieurs dispositifs (9) pour la réception d'eau,
- un ou plusieurs dispositifs (10) pour le soutirage d'eau,
l'espace de séquestration (3) ayant une structure à parois multiples (14, 18, 19, 21, 22, 23), la paroi extérieure (14) ayant une stabilité telle qu'elle résiste à la pression tectonique (13) et la paroi intérieure stabilisatrice (18) amortissant la pression de l'eau (7) et les événements tectoniques, **caractérisé en ce que** la paroi extérieure (14) est formée par des cuvelages (15), dans lesquels sont introduits ou peuvent être disposés différents dispositifs (9) qui, d'une part, conviennent pour fixer les parois de séparation (6) à la paroi extérieure (14) et, d'autre part, permettent un assemblage de la paroi extérieure (14) avec une paroi intérieure stabilisatrice (18), éventuellement par l'intermédiaire d'éléments de liaison spécifiques.

2. Système de stockage d'eau selon la revendication 1, **caractérisé en ce que** l'espace de séquestration (3) est formé par des tubes à effet tunnel.

3. Système de stockage d'eau selon la revendication 1 ou la revendication 2, **caractérisé en ce que** l'espace de séquestration (3) est divisé en unités de séquestration (5) séparées les unes des autres, qui peuvent être reliées entre elles, chaque unité de séquestration (5) étant pourvue d'un ou plusieurs dispositifs de réception (9) et d'un ou plusieurs dispositifs de soutirage d'eau (10) .

4. Système de stockage d'eau selon l'une quelconque des revendications 1 à 3, **caractérisé en ce que** la paroi intérieure (16) de l'espace de séquestration (3) ou des unités de séquestration (5) présente une structure à deux parois ou plus.

5. Système de stockage d'eau selon l'une quelconque des revendications 1 à 4, **caractérisé en ce que** la paroi intérieure stabilisatrice (18) et la couche intérieure (19) de la paroi intérieure (16) sont constituées d'un matériau en béton muni d'une armature non corrosive.

6. Système de stockage d'eau selon la revendication 5, **caractérisé en ce que** la couche intérieure (19) est un mélange de ciment spécial ou un mélange de mortier et ce mélange est additionné d'additifs de matériaux formant des ions et/ou de substances décontaminantes, qui peuvent également se présenter sous forme de nanoparticules, qui peuvent par exemple former des ions Ag et/ou Cu ou d'autres substances à effet bactéricide, antiviral ou fongicide, ceux-ci étant appliqués sur la couche intérieure (19) sous forme d'un ou de plusieurs revêtements intérieurs correspondants (21).

7. Système de stockage d'eau selon la revendication 5, **caractérisé en ce qu'**une grille stabilisatrice (20) en matériau résistant à la corrosion et conducteur de courant, interconnectée par des éléments de liaison, est introduite dans la couche intérieure (19) en tant que matériau d'armature, qui présente un ou plusieurs dispositifs qui dissipent des courants ou des surtensions.

8. Système de stockage d'eau selon l'une quelconque des revendications 5 à 7, **caractérisé en ce que** des éléments en carbone et/ou des éléments en fibres de verre sont ajoutés à la paroi intérieure stabilisatrice (18) une couche intérieure (19) et ou d'autres revêtements intérieurs (21), à l'exception de la couche de contact venant en contact avec l'eau séquestrée, en une concentration telle que ceux-ci ont des effets positifs optimaux sur la résistance mécanique de leur configuration en fonction de l'épaisseur de couche et de leur configuration.

9. Système de stockage d'eau selon l'une quelconque des revendications 5 ou 6, **caractérisé en ce qu'**au lieu du ou des revêtements intérieurs (21), un placage est appliqué sur la couche intérieure (19), dont les segments individuels sont conçus en termes de forme et de taille et présentent de préférence des dispositifs sur son côté arrière de telle sorte qu'un détachement est rendu difficile, en même temps la surface venant en contact avec l'eau séquestrée présente un degré de dureté élevé, qui, si nécessaire, a des propriétés hydrophobes et/ou antisalissures, sinon est poncée pour être lisse et/ou polie.

10. Système de stockage d'eau selon l'une quelconque des revendications 5 à 8, **caractérisé en ce que** la couche intérieure (19) et les revêtements intérieurs (21) appliqués sur celle-ci sont formés par un placage (22), qui est appliqué sur la paroi intérieure stabilisatrice (18), dont les composants individuels sont fixés sur une grille (20) résistante à la corrosion et conductrice de courant, qui convient bien en tant que matériau d'armature et qui est durable, les grilles étant interconnectées entre elles par des éléments de liaison appropriés, c'est-à-dire constituant un placage en treillis de carbone (23), ces grilles (20) contenant un ou plusieurs dispositifs qui peuvent dissiper des courants et des surtensions.

11. Système de stockage d'eau selon les revendications 8 et 9, **caractérisé en ce que** le matériau de remplissage et de jointoiement pour le placage (22, 23) est un mélange de béton spécial ou des mélanges de béton spécial respectivement différents, les additifs contenant éventuellement des concentrations différentes de matériaux formant des ions et/ou de substances décontaminantes, qui peuvent également se présenter sous la forme de nanoparticules, qui contiennent par exemple des ions Ag et/ou Cu ou d'autres substances qui exercent un effet bactéricide, antiviral ou fongicide.

12. Procédé de réception et de séquestration d'eau dans des régions semi-arides ou des régions arides, y compris des régions tropicales et subtropicales, dans lesquelles les précipitations sont généralement saisonnières, procédé dans lequel les précipitations sont recueillies par un système de stockage d'eau aménagé sous forme souterraine, transférées dans un ou plusieurs espaces de séquestration et séquestrées dans ceux-ci, le système de stockage d'eau comprenant :
- un ou plusieurs dispositifs det/ou de réception d'eau à partir de précipitations saisonnières ou qui provient d'autres ressources en eau pour le stockage,
- au moins un espace de séquestration (3) pour la séquestration d'eau, qui est relié à des dispositifs (9) de réception d'eau,
- un ou plusieurs dispositifs (10) de soutirage d'eau, l'espace de séquestration (3) ayant une structure à parois multiples (14, 18, 19, 21, 22, 23), la paroi extérieure (14) ayant une stabilité telle qu'elle résiste à la pression tectonique (13) et la paroi intérieure stabilisatrice (18) amortissant la pression de l'eau (7) et les événements tectoniques, et la paroi extérieure (14) étant formée par des cuvelages (15), dans lesquels sont introduits ou peuvent être disposés différents dispositifs qui, d'une part, conviennent pour fixer les parois de séparation (6) à la paroi extérieure (14) et, d'autre part, permettent un assemblage de la paroi extérieure (14) avec une paroi intérieure stabilisatrice (18), éventuellement par l'intermédiaire d'éléments de liaison spécifiques.
